# EUROPÄISCHE PATENTANMELDUNG

(11) **EP 4 344 964 A1**
(43) Veröffentlichungstag der Anmeldung: **03.04.2024**
(21) Anmeldenummer: 22198785.2
(22) Anmeldetag: 29.09.2022
(51) Int. Cl.: B60R 25/04, B64D 45/00, B64D 47/00, B60R 25/20

(54) **VERFAHREN ZUR VERHINDERUNG EINER FLUGZEUGDIEBSTAHLS UND SYSTEM ZUR DATENVERARBEITUNG ZUR VERHINDERUNG EINES FLUGZEUGSDIEBSTAHLS**

(71) Anmelder: Airbus Operations GmbH, 21129 Hamburg (DE)
(72) Erfinder: Weisser, Tilmann, 21129 Hamburg (DE)

(57) **Zusammenfassung**

Dargestellt und beschrieben ist ein Verfahren 1 zur Verhinderung eines Flugzeugsdiebstahls mit den Schritten Anfragen 3 eines elektronischen Motorstartcodes durch das Flugzeug an einen Empfänger, Überprüfen 5 durch den Empfänger, ob das Flugzeug als gestohlen gemeldet ist, Bereitstellen 7 von mindestens einem elektronischen Motorstartcode durch den Empfänger nur wenn das Flugzeug nicht als gestohlen gemeldet ist, und Starten 9 eines Flugzeugmotors mittels dem bereitgestellten elektronischen Motorstartcode. Ferner dargestellt und beschrieben ist ein System 11 zur Datenverarbeitung zur Verhinderung eines Flugzeugsdiebstahls, umfassend ein Flugzeug 13 mit wenigstens einem Motor 15 und einem Flugzeugprogramm zum Starten eines Flugzeugmotors mit Hilfe eines Prozessors, der so konfiguriert ist, dass er die Schritte des Anfragens 3 und Startens 9 ausführt, wobei der Empfänger ein Flugzeughersteller ist, der den Schritt des Überprüfens 5 ob ein Flugzeug 13 als gestohlen gemeldet ist auf Basis einer Datenbank durchführt.

## Beschreibung

Die vorliegende Anmeldung betrifft ein Verfahren zur Verhinderung eines Flugzeugsdiebstahls sowie ein System zur Datenverarbeitung zur Verhinderung eines Flugzeugsdiebstahls.

In jüngster Zeit kam es durch politische Maßnahmen zu Situationen, in denen Flugzeuge nicht mehr für ihren Eigentümer wie beispielsweise eine Leasingfirma oder eine Airline erreichbar waren. Wie allseits bekannt, ist für einen vorschriftsmäßigen Betrieb und den Erhalt einer Flugerlaubnis eine regelmäßige Überprüfung und Wartung des Flugzeugs durch zugelassene qualifizierte Unternehmen notwendig. Werden Reparaturen durch nicht zugelassene Unternehmen getätigt, verliert das jeweilige Flugzeug seine Zulassung. Kritisch für eine spätere erneute Zulassung ist auch, wenn ein unbefugter Dritter nicht daran gehindert werden kann, sich des (für den Eigentümer unerreichbaren) Flugzeugs zu bemächtigen. Sobald das Flugzeug zum einen entwendet und/oder zum anderen durch nichtzertifizierte Wartungsfirmen ("Maintenance and Repair Organisations" (MROs)) gewartet wurde, ist nicht mehr nachvollziehbar, welche Änderungen am Flugzeug vorgenommen wurden. Selbst wenn der Eigentümer sein Flugzeug also zu einem späteren Zeitpunkt zurückerhält, so ist es weder wirtschaftlich noch sicher, diesem Flugzeug seine Zulassung wiederzubeschaffen.

In der US 5,479,162 A geht es um ein nachrüstbares System für ein Flugzeug, mit dem eine unbefugte Benutzung dieses Flugzeugs verhindert wird. Hierbei entriegelt eine Steuerung erst dann einen gesperrten Zustand, wenn sie feststellt, dass ein Eingangscode mit einem gespeicherten Zugangscode übereinstimmt. Wenn ein Motor ausgeschaltet ist, wird das System nach einer bestimmten Zeit in einen verriegelten Zustand versetzt. Diese Zeit muss lang genug sein, um sicherzustellen, dass Flugzeug am Boden ist, unabhängig davon, ob ein Neustart während des Fluges versucht wurde oder nicht, aber andererseits kurz genug, um sicherzustellen, dass der Pilot das Flugzeug nicht für eine längere Zeit unbeaufsichtigt gelassen hat, während das Diebstahlsicherungssystem noch deaktiviert war. Das in US 5,479,162 A vorgeschlagene System darf im Flug nicht eingreifen und den Piloten zwingen, sich erneut einen Sicherheitscode zu merken und einzugeben.

Die US 6,073,062 beschreibt ein Betriebsmanagementsystem für ein Fahrzeug, das eine Maschinenstart- und -stopsteuerung mittels Code-Transmission hat. Hierbei wird eine von einer IC-Karte gelesene Fahrzeug-ID-Nummer mit einer in einem mobilen Terminal gespeicherten Fahrzeug-ID-Nummer abgeglichen. Wenn es keine Übereinstimmung gibt, stellt das mobile Terminal fest, dass der Fahrer, der die entsprechende IC-Karte besitzt, nicht für das Fahren des entsprechenden Fahrzeugs vorgesehen ist, und gibt die IC-Karte nach Ausgabe einer Fehlermeldung aus. Stimmt dagegen die auf der IC-Karte gespeicherte Fahrzeug-ID-Nummer mit der im mobilen Endgerät gespeicherten Fahrzeug-ID-Nummer überein, startet das mobile Endgerät 172a die Zündung des Motors.

Die JP 10016711 A beschreibt ein Motorverriegelungssystem mit einer Motorfernstartvorrichtung.

Aus der JP 2005022491 A ist eine Fahrzeug-Diebstahlsicherung bekannt, die einen übermittelten Code verifiziert und den Motorstart und die Lenkung steuert.

Die US 2010/0286846 offenbart ein Diebstahlsicherungssystem mit einem Motormanagementsystem, das übermittelte Codes verifiziert.

Die US 6,757,596 B1 erläutert ein Diebstahlsicherungssystem für Flugzeuge mit biometrischer Datenüberprüfung zur Verhinderung einer unbefugten Benutzung.

Nachteilig am Stand der Technik ist, dass ein einmal bereitgestellter übermittelter gültiger Code zum Starten des (Flugzeug-)Motors verwendet werden kann, unabhängig davon ob der Eigentümer dem Vorgang noch zustimmt.

Es ist Aufgabe der vorliegenden Erfindung, einen verbesserten Diebstahlsschutz für ein Flugzeug bereitzustellen.

Zur Lösung dieser Aufgabe dient ein Verfahren nach Anspruch 1 sowie ein System zur Datenverarbeitung nach Anspruch 7. Vorteilhafte Ausführungsformen sind Gegenstand der jeweiligen Unteransprüche.

Grundsätzliches Ziel der vorliegenden Anmeldung ist es, dass es möglich sein soll, sein Flugzeug als gestohlen zu melden und dadurch eine Diebstahlsicherung zu aktivieren, die berücksichtigt, dass ein Neustart aus Sicherheitsgründen während eines Flugs bzw. im Offline-Modus, d.h. ohne Datenempfang, zumindest eine Zeitlang (also beispielsweise bis zur nächsten Landung oder sobald Datenempfang wieder möglich ist) weiterhin möglich sein soll.

Das erfindungsgemäße Verfahren zur Verhinderung eines Flugzeugsdiebstahls umfasst die Schritte Anfragen eines elektronischen Motorstartcodes durch das Flugzeug an einen Empfänger, Überprüfen durch den Empfänger, ob das Flugzeug als gestohlen gemeldet ist und Bereitstellen von mindestens einem elektronischen Motorstartcode durch den Empfänger nur wenn das Flugzeug nicht als gestohlen gemeldet ist und Starten eines Flugzeugmotors mittels dem bereitgestellten elektronischen Motorstartcode.

Im ersten Schritt ("Anfragen") bedeutet "Anfragen durch ein Flugzeug", dass eine solche Anfrage durch ein geeignetes System getätigt wird, das sich an Bord des Flugzeugs befindet. Beispielsweise kann diese Anfrage durch ein erfindungsgemäßes System zur Datenverarbeitung zur Verhinderung eines Flugzeugsdiebstahls gestellt werden.

Dieses erfindungsgemäße System umfasst ein Flugzeug mit wenigstens einem Motor und einem Flugzeugprogramm zum Starten eines Flugzeugmotors mit Hilfe eines Prozessors, der so konfiguriert ist, dass er die Schritte des Anfragens und Startens nach einem der Ansprüche 1 bis 6 ausführt, wobei der Empfänger ein Flugzeughersteller bzw. ein Server eines Flugzeugherstellers ist, der den Schritt des Überprüfens ob ein Flugzeug als gestohlen gemeldet ist auf Basis einer Datenbank durchführt.

Der Prozessor ist vorzugsweise Bestandteil einer Flugzeugsteuerungseinheit, in der auch die Flugzeugsteuerdaten verarbeitet werden. Diese integrale Ausführungsform ist im Falle eines Einbaus während des sogenannten "Linefits" (also einer seriellen Fertigung) am einfachsten zu realisieren. Grundsätzlich ist aber auch eine nachrüstbare Version (dem sogenannten "Retrofit") denkbar, bei der der Prozessor der Flugzeugsteuerungseinheit vorgeschaltet wird, z.B. durch eine nachträglich installierbare Box.

Natürlich ist es grundsätzlich auch denkbar, dass der Schritt "Anfragen" manuell durch den Flugzeugführer initiiert werden kann durch eine Nachricht (z.B. per Email, SMS oder Telefonat).

Ferner kann der Empfänger auch beispielsweise eine Behörde bzw. ein Server einer Behörde sein. Da die jüngsten Diebstähle jedoch durch eine Regierung begangen wurden, und auch eine Airline oder z.B. bei einer Entführung eine Einzelperson für einen

Flugzeugdiebstahl in Frage kommen, erscheint die Durchführung des Schritts "Überprüfen" durch einen Server eines Flugzeugherstellers am neutralsten und zuverlässigsten für den Flugzeugeigentümer.

Der Schritt " Bereitstellen" von mindestens einem elektronischen Motorstartcode durch den Empfänger bzw. durch einen Server eines Empfängers erfolgt nur dann, wenn das Flugzeug nicht als gestohlen gemeldet ist. Dies kann durch einen einfachen automatischen Abgleich mit einer Datenbank geschehen.

Der Schritt "Starten" eines Flugzeugmotors mittels dem bereitgestellten elektronischen Motorstartcode erfolgt nach der Bereitstellung desselben. Dies kann unmittelbar nach der Bereitstellung sein oder innerhalb einer bestimmten Zeitspanne, die geeignet ist, um noch letzte Dinge vor dem Start zu überprüfen.

Wenn der Schritt "Starten eines Flugzeugmotors" während einer Flugphase des Flugzeugs notwendig ist oder wenn der Empfänger nicht erreichbar ist, dann kann das erfindungsgemäße Verfahren derart durchgeführt werden, dass ein bereits bereitgestellter Motorstartcode zum Starten des Flugzeugmotors verwendet wird, der sozusagen "als Notfallvorrat" herausgegeben wurde. Alternativ kann auch der bereits zum erfolgreichen Starten des Flugzeugs verwendete Motorstartcode einfach noch einmal verwendet werden. Weiter alternativ ist es möglich, dass die Eingabe eines Motorstartcodes zum Starten bzw. Wiederanlassen des Motors während einer Flugphase gar nicht notwendig ist. Um einem Missbrauch bereitgestellter aktiver Motorstartcodes vorzubeugen, werden sie vorzugsweise wieder gelöscht, sobald das Flugzeug meldet, dass es gelandet ist. Im Fall einer Landung in einem Offline-Gebiet, wo solch eine Meldung zur Mitteilung eines "aircraft on ground"-Status nicht möglich ist, können dann also zuvor bereitgestellte Motorstartcodes für einen normalen Startprozess verwendet werden. Es ist beispielsweise auch denkbar, dass die Motorstartcodes immer tage- oder wochenweise herausgegeben werden. Wesentlich ist, dass in frei zu bestimmenden Zeitintervallen (z.B. wochen- oder tageweise) jeweils infolge des Schritts des Anfragens regelmäßig immer wieder ein bzw. mehrere Motorstartcode(s) bereitgestellt wird/werden. Sollte das Flugzeug zwischenzeitlich als gestohlen gemeldet worden sein, bleibt der Schritt des Anfragens unbeantwortet und es werden keine Motorstartcodes mehr zu Verfügung gestellt, so dass das Flugzeug am Boden bleibt.

Das erfindungsgemäße Verfahren führt den Schritt des "Überprüfens" also auf Basis vom Flugzeughersteller bereitgestellten Daten durch, und dies regelmäßig, beispielsweise einmal wöchentlich . Der/die bereitgestellte(n) Motorstartcode(s) wären dann für den bestimmten Zeitraum, also z.B. eine Woche lang gültig.

Der erfindungsgemäße Schritt des Bereitstellens wird vorzugsweise mittels Kurznachrichtendienst (SMS) oder Email durchgeführt, es ist aber natürlich auch jede andere elektronische Kommunikationsform denkbar, mit der durch ein elektronisches, vorzugsweise verschlüsseltes Signal ein oder mehrere Motorstartcodes übermittelt werden können.

Bevorzugt ist der Empfänger der Anfrage ein Flugzeughersteller.

Die Erfindung wird im Folgenden unter Bezugnahme auf die beiden Zeichnungen erläutert.
Figur 1 zeigt schematisch die Schritte des erfindungsgemäßen Verfahrens und
Figur 2 zeigt ein Flugzeug mit einem erfindungsgemäßen System.

Das dargestellte erfindungsgemäße Verfahren (1) zur Verhinderung eines Flugzeugsdiebstahls umfasst die Schritte
- Anfragen (3) eines elektronischen Motorstartcodes durch das Flugzeug an einen Empfänger,
- Überprüfen (5) durch den Empfänger, ob das Flugzeug als gestohlen gemeldet ist,
- Bereitstellen (7) von mindestens einem elektronischen Motorstartcode durch den Empfänger nur wenn das Flugzeug nicht als gestohlen gemeldet ist, und
- Starten (9) eines Flugzeugmotors mittels dem bereitgestellten elektronischen Motorstartcode.

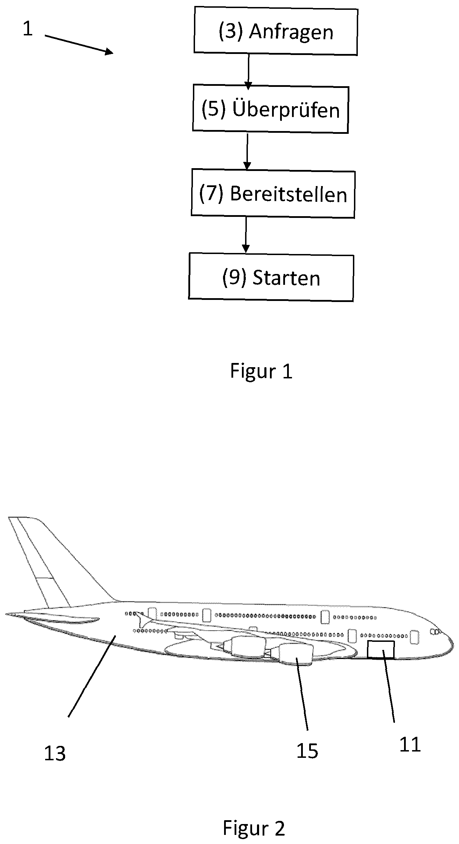

Der Schritt des Anfragens (3) erfolgt vorzugsweise in regelmäßigen Abständen, beispielsweise tage- oder wochenweise. Jedoch kann in dem dargestellten erfindungsgemäßen Verfahren (1), wenn das Starten (9) eines Flugzeugmotors während einer Flugphase des Flugzeugs notwendig ist oder wenn der Empfänger nicht erreichbar ist, ein bereits bereitgestellter Motorstartcode zum Starten (9) des Flugzeugmotors verwendet werden. Dies ist dann beispielsweise so lange möglich bis das Flugzeug wieder aus dem Offlinemodus herausgeflogen und wieder gelandet ist, was beispielsweise durch ein positives "Weight on Wheels"-Sensorsignal als "aircraft on ground" verifiziert kann. Dieses Signal kann dann in einem erfindungsgemäßen System (11), siehe Beschreibung zu Figur 2, verarbeitet werden. Während des Flugs kann alternativ aus Sicherheitsgründen auch vollständig von der Verwendung von Motorstartcodes abgesehen werden. Dies hat den Vorteil, dass es zu keiner Verzögerung beim Wiederanlassen des Flugzeugmotors kommen kann.

Der erfindungsgemäße Schritt des Überprüfens (5) erfolgt auf Basis einer Datenbank, in der erfasst wird, ob ein Flugzeug als gestohlen gemeldet ist.

Der erfindungsgemäße Schritt des Bereitstellens (7) wird vorzugsweise mittels Kurznachrichtendienst (SMS) oder Email durchgeführt. Es ist aber auch jede andere Form der elektronischen Datenübermittlung denkbar.

In dem erfindungsgemäßen Verfahren (1) ist der Empfänger vorzugsweise ein Flugzeughersteller.

Der erfindungsgemäße Schritt des Startens (9) kann entweder unmittelbar durch den in dem erfindungsgemäßen System zur Datenverarbeitung umfassten Prozessor ausgelöst werden. Alternativ kann das Starten (9) auch mit etwas Verzögerung oder anschließend und erst nach einem Drücken eines Startknopfes oder Umdrehen eines Zündschlüssels etc. erfolgen.

In Figur 2 ist schematisch ein System (11) zur Datenverarbeitung zur Verhinderung eines Flugzeugsdiebstahls zu sehen, umfassend ein Flugzeug (13) mit wenigstens einem Motor (15) und einem Flugzeugprogramm zum Starten des Flugzeugmotors (15) mit Hilfe eines Prozessors, der so konfiguriert ist, dass er die Schritte des Anfragens (3) und Startens (9) wie zuvor beschrieben ausführt, wobei der Empfänger ein Flugzeughersteller ist, der den Schritt des Überprüfens (5) ob ein Flugzeug als gestohlen gemeldet ist auf Basis einer Datenbank durchführt.

### Bezugszeichen

- 1: Verfahren
- 3: Anfragen
- 5: Überprüfen
- 7: Bereitstellen
- 9: Starten
- 11: System zur Datenverarbeitung
- 13: Flugzeug
- 15: Flugzeugmotor

## Patentansprüche

1. Verfahren (1) zur Verhinderung eines Flugzeugsdiebstahls mit den Schritten
- Anfragen (3) eines elektronischen Motorstartcodes durch das Flugzeug an einen Empfänger,
- Überprüfen (5) durch den Empfänger, ob das Flugzeug als gestohlen gemeldet ist,
- Bereitstellen (7) von mindestens einem elektronischen Motorstartcode durch den Empfänger nur wenn das Flugzeug nicht als gestohlen gemeldet ist, und
- Starten (9) eines Flugzeugmotors mittels dem bereitgestellten elektronischen Motorstartcode.

2. Verfahren nach Anspruch 1, wobei der Schritt des Anfragen in regelmäßigen Abständen erfolgt.

3. Verfahren nach einem der vorherigen Ansprüche, wobei der Schritt des Anfragens nur dann durchgeführt wird, wenn sich das Flugzeug nicht in einer Flugphase befindet.

4. Verfahren nach Anspruch 1 oder 2, wobei wenn das Starten eines Flugzeugmotors während einer Flugphase des Flugzeugs notwendig ist, ein bereits bereitgestellter Motorstartcode zum Starten des Flugzeugmotors verwendet wird.

5. Verfahren nach Anspruch 1 oder 2, wobei wenn der Empfänger nicht erreichbar ist, ein bereits bereitgestellter Motorstartcode zum Starten des Flugzeugmotors verwendet wird.

6. Verfahren nach einem der vorherigen Ansprüche, wobei der Schritt des Überprüfens auf Basis einer Datenbank erfolgt.

7. Verfahren nach einem der vorherigen Ansprüche, wobei der Schritt des Bereitstellens mittels Kurznachrichtendienst (SMS) oder Email durchgeführt wird.

8. Verfahren nach einem der vorherigen Ansprüche, wobei der Empfänger ein Flugzeughersteller ist.

9. System (11) zur Datenverarbeitung zur Verhinderung eines Flugzeugsdiebstahls, umfassend ein Flugzeug (13) mit wenigstens einem Motor (15) und einem Flugzeugprogramm zum Starten eines Flugzeugmotors mit Hilfe eines Prozessors, der so konfiguriert ist, dass er die Schritte des Anfragens (3) und Startens (9) nach einem der Ansprüche 1 bis 8 ausführt, wobei der Empfänger ein Flugzeughersteller ist, der den Schritt des Überprüfens (5) ob ein Flugzeug (13) als gestohlen gemeldet ist auf Basis einer Datenbank durchführt.
